# EUROPEAN PATENT SPECIFICATION

(11) **EP 2 567 987 B1**
(45) Date of publication and mention of the grant of the patent: **27.04.2016**
(21) Application number: 11866442.4
(22) Date of filing: 24.06.2011
(51) Int. Cl.: C08F 4/6592, C08F 4/656, C08F 210/16, C08F 110/02

(54) **TRANSITION METAL CATALYST SYSTEM WITH EXCELLENT COPOLYMERIZATION AND PREPARATION METHOD OF ETHYLENE HOMOPOLYMER OR COPOLYMER OF ETHYLENE AND -OLEFIN USING SAME**
ÜBERGANGSMETALLKATALYSATORSYSTEM MIT HERVORRAGENDER COPOLYMERISATION UND VERFAHREN FÜR DIE ZUBEREITUNG VON ETHYLENHOMOPOLYMER ODER ETHYLENCOPOLYMER UND -OLEFIN DAMIT
SYSTÈME DE CATALYSEUR DE MÉTAUX DE TRANSITION PRÉSENTANT UNE EXCELLENTE COPOLYMÉRISATION ET PROCÉDÉ DE PRÉPARATION D'UN HOMOPOLYMÈRE D'ÉTHYLÈNE OU D'UN COPOLYMÈRE D'ÉTHYLÈNE ET D' -OLÉFINE UTILISANT CE SYSTÈME

(43) Date of publication of application: 13.03.2013
(73) Proprietor: SABIC SK NEXLENE COMPANY PTE. LTD., Singapore 018989 (SG)
(72) Inventor: LEE, Ho Seong, Seoul 151-050 (KR); HAHN, Jong Sok, Daejeon 305-761 (KR); SHIN, Dong Cheol, Daejeon 305-762 (KR); LEE,Hyo Sun, Daegu 702-012 (KR); WU, Chun Ji, Daegu 702-010 (KR)
(74) Representative: Stolmár & Partner Patentanwälte PartG mbB
(86) International application number: PCT/KR2011/004608
(87) International publication number: WO 2012/176946

(56) References cited:
- EP-A1- 1 040 146
- WO-A1-2005/028584
- WO-A2-2004/046214
- US-A- 5 504 169
- US-A- 5 539 056
- US-A1- 2001 044 505
- US-A1- 2004 092 680
- US-A1- 2004 152 851
- US-A1- 2004 220 359

## Description

### [Technical Field]

The present invention relates a method of preparing a copolymer of ethylene and α-olefin using a homogeneous catalytic system comprising a titanium catalyst in which a cyclopentadienyl derivative, the 3,4-positions of which are substituted with alkyls, and an electron-donating substituent are crosslinked around the Group 4 transition metal. The catalytic system is comprising such a transition metal catalyst and a co-catalyst including one or more selected from among aluminoxane and a boron compound.

### [Background Art]

Conventional ethylene homopolymers or copolymers with α-olefin have been typically prepared using so-called a Ziegler-Natta catalytic system comprising a titanium or vanadium compound as a main catalyst and an alkylaluminum compound as a co-catalyst. Although the Ziegler-Natta catalytic system is highly active for ethylene polymerization, it has non-uniform active sites, so that the produced polymer has a wide molecular weight distribution, and, in particular, the composition distribution is not uniform in copolymerization of ethylene and α-olefin.

Recently, there has been developed a metallocene catalytic system composed of a metallocene compound of Group 4 transition metal of the periodic table, such as titanium, zirconium, hafnium, and a co-catalyst such as methylaluminoxane. Because the metallocene catalytic system is a homogeneous catalyst having single active sites, it enables the preparation of polyethylene having a narrower molecular weight distribution and a more uniform composition distribution, compared to when using the conventional Ziegler-Natta catalytic system. For example, EP Patent Application Publication Nos. 320,762 and 3,726,325, Japanese Patent Laid-open Publication No. Sho. 63-092621, and Japanese Patent Laid-open Publication Nos. Hei. 02-84405 and 03-2347 disclose a metallocene compound such as Cp₂TiCl₂, Cp₂ZrCl₂, Cp₂ZrMeCl, Cp₂ZrMe₂, ethylene (IndH₄) ₂ZrCl₂, which is activated with a methylaluminoxane co-catalyst, so that ethylene is highly actively polymerized, thereby preparing polyethylene having a molecular weight distribution (Mw/Mn) of 1.5 ~ 2.0. However, this catalytic system makes it difficult to obtain a high-molecular-weight polymer. In particular, when this is applied to solution polymerization at a high temperature of at least 140°C, polymerization activity is drastically decreased and β-dehydrogenation is predominantly carried out, and thus such a catalytic system is known to be unsuitable to prepare a high-molecular-weight polymer having a weight average molecular weight (Mw) of 100,000 or more.

US Patent No. 5,084,534 by Exxon discloses the preparation of a copolymer having a narrow molecular weight distribution of 1.8 ~ 3.0 and a uniform composition distribution by polymerizing ethylene alone or ethylene with 1-hexene or 1-octene at 150 ~ 200°C using a (n-BuCp)₂ZrCl₂ catalyst and a methylaluminoxane co-catalyst. In addition, EP Patent Nos. 0416815 and 0420436, by Dow, disclose a catalyst the structure of which is geometrically controlled by connecting an amide group in the form of a ring to a cyclopentadiene ligand, and which exhibits high catalytic activity upon polymerizing ethylene alone or ethylene with α-olefin under slurry polymerization or solution polymerization conditions and also increases high reactivity with comonomers, thereby enabling the preparation of a high-molecular-weight polymer having a uniform composition distribution. As in the metallocene catalyst, however, the above catalyst is drastically deteriorated in terms of catalytic stability and comonomer incorporations in proportion to an increase in the temperature under high-temperature solution polymerization conditions of at least 140°C, and economic benefits negate attributed to high material cost, making it difficult to industrially use it.

In US 2001/0044505 A1 is described a process for producing homopolymers and interpolymers of olefins by contacting an olefin and/or an olefin and at least one or more other olefin(s) under polymerization conditions with a metallocene catalyst and dinitrogen monoxide in amounts sufficient to reduce the electrostatic charge in the polymerization medium. By addition of dinitrogen monoxide agglomeration of small polymer particles with formation of larger agglomerates is prevented, that may plug the polymer discharge system or may form deposits e.g. on a fluidization grid thereby disturbing fluidization efficiency.

US 2004/0092680 A1 describes low molecular weight olefin polymers prepared by a polymerization process employing titanium complexes comprising a 3-aryl-substituted cyclopentadienyl ring or substituted derivatives thereof.

### [Disclosure]

### [Technical Problem]

Culminating in the present invention, intensive and thorough research was carried out by the present inventors aiming to solve the problems encountered in the related art, which resulted in the finding that a geometrically constrained catalyst in which a cyclopentadienyl derivative 3,4-positions of which are substituted with alkyls and an electron-donating substituent are crosslinked around a Group 4 transition metal is remarkably advanced in terms of comonomer incorporations, making it suitable to prepare an ethylene homopolymer or an elastic copolymer of ethylene and α-olefin, having high molecular weight and high activity using solution polymerization at a high temperature of at least 140°C.

Therefore, an object of the present invention is to provide a high-temperature solution polymerization method which enables a copolymer of ethylene and α-olefin, having various properties, to be easily prepared from an industrial point of view.

### [Technical Solution]

In the method of the present invention is used a transition metal compound represented by Chemical Formula 1 below, in which a cyclopentadiene derivative 3,4-positions of which are substituted with alkyls an electron-donating substituent are crosslinked around a titanium metal as a central metal. In addition, in the method of the present invention a catalyst composition is used comprising the above transition metal compound and a co-catalyst selected from among an aluminum compound, a boron compound and mixtures thereof. The invention pertains to a method of preparing an ethylene homopolymer or a copolymer of ethylene with α-olefin using the above described catalyst system.

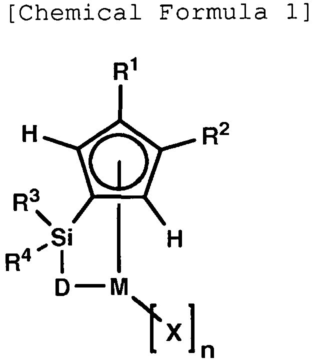

[In Chemical Formula 1, M is titanium;
R¹ and R² are a (C1-C7) alkyl group;
D is -N(R⁵)-, in which R⁵ is a (C1-C20) alkyl group;
R³ and R⁴ are independently a (C1-C20)alkyl group;
X is independently a halogen atom or a (C1-C20)alkyl group
and
n is 2.

The transition metal catalyst composition for preparing a copolymer of ethylene and α-olefin, is comprising the above transition metal compound and a co-catalyst selected from among an aluminum compound, a boron compound and mixtures thereof.

Below, the present invention is described in more detail. Specifically, M is titanium. Also, R¹ and R² which are independently located at 3,4-positions of cyclopentadienyl able to form η⁵-bond with M are a (C1-C7) alkyl group, for example, a methyl group, an ethyl group, a n-propyl group, an isopropyl group, a n-butyl group, a *sec*-butyl group, a *tert-*butyl group, or a n-pentyl group, and particularly useful is a methyl group.

Also, R⁵ is a (C1-C20)alkyl group and more specifically a methyl group, an ethyl group, a n-propyl group, an isopropyl group, a *sec*-butyl group, a *tert*-butyl group. Particularly useful is a *tert*-butyl group.

Also, R³ and R⁴ bound with Si are independently a (C1-C20)alkyl group, and examples of the (C1-C20)alkyl group include a methyl group, an ethyl group, a n-propyl group, an isopropyl group, a n-butyl group, a *sec*-butyl group, a tert-butyl group, a n-pentyl group, a neopentyl group, an amyl group, a n-hexyl group, a n-octyl group, a n-decyl group, a n-dodecyl group, a n-pentadecyl group or a n-eicosyl group, and particularly useful is a methyl group, an ethyl group, an isopropyl group, a *tert*-butyl group or an amyl group

X is independently a halogen atom or a (C1-C20)alkyl group. Examples of the halogen atom include fluorine, chlorine, bromine or iodine; examples of the (C1-C20)alkyl group include a methyl group, an ethyl group, a n-propyl group, an isopropyl group, a n-butyl group, a *sec*-butyl group, a *tert*-butyl group, a n-pentyl group, a neopentyl group, an amyl group, a n-hexyl group, a n-octyl group, a n-decyl group, a n-dodecyl group, a n-pentadecyl group or a n-eicosyl group, and particularly useful is a methyl group, an ethyl group, an isopropyl group, a *tert*-butyl group or an amyl group.

Also, n is an integer of 2.

In order to use the transition metal compound of Chemical Formula 1 as a catalyst component active for olefin polymerization, while the ligand X of the transition metal compound according to the present invention is extracted and the central metal thereof is cationized, a boron compound, an aluminum compound or a mixture thereof, corresponding to a counter ion having weak bondability, namely, an anion, is utilized as a co-catalyst. As such, the aluminum compound which is responsible for removing a small amount of polar material such as water acting as catalytic poison may function as an alkylating agent in the case where the ligand X is halogen.

Useful as the co-catalyst in the present invention, the boron compound may be selected from among compounds of Chemical Formulas 2, 3 and 4 below as disclosed in US Patent No. 5,198,401.

[Chemical Formula 2] B(R⁷)₃

[Chemical Formula 3] [R⁸]⁺[B(R⁷)₄]⁻

[Chemical Formula 4] [(R⁹)_{q}ZH]⁺[B(R⁷)₄]⁻

[In Chemical Formulas 2 to 4, B is a boron atom; R⁷ is a phenyl group, in which the phenyl group may be further substituted with three to five substituents selected from among a fluorine atom, a fluorine-substituted or unsubstituted (C1-C20)alkyl group, and a fluorine-substituted or unsubstituted (C1-C20)alkoxy group; R⁸ is a (C5-C7)cycloalkyl radical, a (C1-C20) alkyl (C6-C20) aryl radical or a (C6-C30)aryl(C1-C20)alkyl radical, for example, a triphenylmethyl radical; Z is a nitrogen atom or a phosphorus atom; R⁹ is a (C1-C20)alkyl radical or an anilinium radical substituted with two (C1-C4)alkyl groups along with a nitrogen atom; and q is an integer of 2 or 3.]

Preferred examples of the boron-based co-catalyst include one or more selected from among tris(pentafluorophenyl)borane, tris (2, 3, 5, 6-tetrafluorophenyl)borane, tris(2,3,4,5-tetrafluorophenyl)borane, tris(3,4,5-trifluorophenyl)borane, tris (2, 3, 4-trifluorophenyl)borane, phenylbis(pentafluorophenyl)borane, tetrakis(pentafluorophenyl)borate, tetrakis (2, 3, 5, 6-tetrafluorophenyl)borate, tetrakis(2,3,4,5-tetrafluorophenyl)borate, tetrakis(3,4,5-tetrafluorophenyl)borate, tetrakis(2,2,4-trifluorophenyl)borate, phenylbis(pentafluorophenyl)borate and tetrakis(3,5-bistrifluoromethylphenyl)borate, and specific combination examples thereof include ferrocenium tetrakis(pentafluorophenyl)borate, 1,1'-dimethylferrocenium tetrakis(pentafluorophenyl)borate, tetrakis(pentafluorophenyl)borate, triphenylmethyl tetrakis(pentafluorophenyl)borate, triphenylmethyl tetrakis(3,5-bistrifluoromethylphenyl)borate, triethylammonium tetrakis(pentafluorophenyl)borate, tripropylammonium tetrakis(pentafluorophenyl)borate, tri(n-butyl)ammonium tetrakis(pentafluorophenyl)borate, tri(n-butyl)ammonium tetrakis(3,5-bistrifluoromethylphenyl)borate, N,N-dimethylanilinium tetrakis(pentafluorophenyl)borate, N,N-diethylanilinium tetrakis(pentafluorophenyl)borate, N,N-2,4,6-pentamethylanilinium tetrakis(pentafluorophenyl)borate, N,N-dimethylanilinium tetrakis(3,5-bistrifluoromethylphenyl)borate, diisopropylammonium tetrakis(pentafluorophenyl)borate, dicyclohexylammonium tetrakis(pentafluorophenyl)borate, triphenylphosphonium tetrakis(pentafluorophenyl)borate, tri(methylphenyl)phosphonium tetrakis(pentafluorophenyl)borate or tri(dimethylphenyl)phosphonium tetrakis(pentafluorophenyl)borate, and particularly useful is N,N-dimethylanilinium tetrakis(pentafluorophenyl)borate, triphenylmethyl tetrakis(pentafluorophenyl)borate or tris(pentafluoro)borane.

The aluminum compound used in the present invention may include an aluminoxane compound of Chemical Formula 5 or 6 below, an organic aluminum compound of Chemical Formula 7 below, or an organic aluminum hydrocarbyl oxide compound of Chemical Formula 8 or 9 below.

[Chemical Formula 5] (-Al (R¹⁰) -O-)ₘ

[Chemical Formula 6] (R¹⁰)₂Al- (-O(R¹⁰) -)p- (R¹⁰)₂

[Chemical Formula 7] (R¹¹) ᵣAl (E) 3-r

[Chemical Formula 8] (R¹²) ₂AlOR¹³

[Chemical Formula 9] R¹² Al (OR¹³)²

[In Chemical Formulas 5 to 9, R¹⁰ is a linear or nonlinear (C1-C20)alkyl group, and preferably is a methyl group or an isobutyl group; m and p are independently an integer of 5 ~ 20; R¹¹ and R¹² are independently a (C1-C20) alkyl group; E is a hydrogen atom or a halogen atom; r is an integer of 1 ~ 3; and R¹³ is a (C1-C20) alkyl group or a (C6-C30)aryl group.]

Useful as the co-catalyst, the aluminum compound is one or more selected from aluminoxane and organic aluminum, and the aluminoxane compound may include methylaluminoxane, modified methylaluminoxane or tetraisobutylaluminoxane; and the organic aluminum compound is selected from among trialkylaluminum, dialkylaluminum chloride, alkylaluminum dichloride, and dialkylaluminum hydride. Specific examples of the organic aluminum compound include trialkylaluminum, including trimethylaluminum, triethylaluminum, tripropylaluminum, triisobutylaluminum and trihexylaluminum; dialkylaluminum chloride, including dimethylaluminum chloride, diethylaluminum chloride, dipropylaluminum chloride, diisobutylaluminum chloride, and dihexylaluminum chloride; alkylaluminum dichloride, including methylaluminum dichloride, ethylaluminum dichloride, propylaluminum dichloride, isobutylaluminum dichloride and hexylaluminum dichloride; and dialkylaluminum hydride, including dimethylaluminum hydride, diethylaluminum hydride, dipropylaluminum hydride, diisobutylaluminum hydride and dihexylaluminum hydride, and preferably useful is trialkylaluminum, and more preferably is triethylaluminum or triisobutylaluminum, in which the molar ratio of central transition metal (M) to aluminum atom (Al) is 1 : 50 ~ 5,000.

As the ratio of transition metal compound to co-catalyst, the molar ratio of central transition metal (M) to boron atom (B) to aluminum atom (Al) is 1 : 0.1 ~ 100 : 10 ~ 1,000, and more preferably 1 : 0.5 ~ 5 : 25 ~ 500. The preparation of an ethylene homopolymer or a copolymer of ethylene and α-olefin is possible within the above range, and the range of the ratio may vary depending on the purity of reaction.

The copolymer of ethylene and α-olefin, prepared by the method of the invention by using the transition metal compound as the catalyst composition, and the preparation method is performed in a solution phase by bringing the transition metal compound, the co-catalyst, and ethylene or α-olefin comonomer into contact with each other in the presence of an appropriate solvent. As such, the transition metal compound and the co-catalyst component may be separately added into a reactor or respective components may be pre-mixed and then introduced into a reactor.

The organic solvent used in the preparation method is preferably a (C3-C20)hydrocarbon, and specific examples thereof include butane, isobutane, pentane, hexane, heptane, octane, isooctane, nonane, decane, dodecane, cyclohexane, methylcyclohexane, benzene, toluene and xylene.
Specifically, upon preparation of an ethylene homopolymers (not covered by the invention), an ethylene monomer is used alone, and the pressure of ethylene suitable is 1 ~ 1000 atm, and preferably 10 ~ 150 atm. When the pressure falls in the above range, a reactor made of a thin material may be used and there is no need for an additional compression process, thus generating economic benefits and increasing the yield of polymer. The polymerization temperature is 60 ~ 300 °C, and preferably 80 ~ 250 °C. If the polymerization temperature is 80°C or higher, low-density polymers may be prepared thanks to advanced comonomer incorporations. In contrast, if the polymerization temperature is 250°C or lower, the conversion from ethylene into polymer may increase, thus obtaining high-density polymers.

In the method of preparing a copolymer of ethylene and α-olefin using the transition metal catalyst composition, the comonomer which is polymerized with ethylene is selected from among 1-butene, 1-pentene, 1-hexene, 1-heptene, 1-octene, 1-decene. More preferably, 1-butene, 1-hexene, 1-octene, or 1-decene may be copolymerized with ethylene. In this case, the preferred ethylene pressure and polymerization temperature are the same as in the preparation of high-density polyethylene, and the ethylene copolymer prepared using the method according to the present invention has an ethylene content of 50 wt% or more, preferably 60 wt% or more, and more preferably 60 ~ 99 wt%. As mentioned above, when using α-olefin of (C4-C8 and C10) hydrocarbon as the comonomer, the resultant linear low-density polyethylene (LLDPE) has a density of 0.860 ~ 0.940 g/cc.

In order to regulate the molecular weight upon preparation of the ethylene homopolymer or copolymer according to the present invention, hydrogen may be used as a molecular weight regulating agent, so that a weight average molecular weight (Mw) is 80,000 ~ 500,000, and a molecular weight distribution (Mw/Mn) which is the ratio of weight average molecular weight/number average molecular weight is 1.5 ~ 4.1.

The catalyst composition is present in a uniform form in the polymerization reactor, and thus is preferably applied to solution polymerization that is carried out at a temperature not lower than the melting point of the corresponding polymer. However, as disclosed in US Patent No. 4,752,597, a heterogeneous catalytic system resulting from supporting the above transition metal compound and a co-catalyst on a porous metal oxide support may be employed in slurry polymerization or gas polymerization.

### [Advantageous Effects]

According to the present invention, a transition metal compound or a catalyst composition including the transition metal compound can be easily produced at high yield using a simple process by reducing the number of alkyls except for a specific portion of cyclopentadiene, thus generating economic benefits. Furthermore, the catalyst has high thermal stability and thus maintains high catalytic activity upon olefin polymerization under high-temperature solution polymerization conditions and also enables the preparation of a high-molecular-weight polymer at high yield. Also, because the catalyst is advanced in terms of comonomer incorporations, its industrial availability is higher compared to conventionally known metallocene and non-metallocene based catalysts having single active sites.

Thus, according to the invention the transition metal catalyst composition can be efficiently utilized for preparing copolymers of ethylene and α-olefin, having various properties and elastic moduli.

### [Best Mode]

Unless otherwise stated, all ligands and catalyst synthesis tests were performed using standard Schlenk or glove box techniques in a nitrogen atmosphere, and the organic solvent used in the reaction was refluxed in the presence of sodium metal and benzophenone to remove water, and then distilled just before use. The ¹H-NMR analysis of the synthesized ligand and catalyst was performed at room temperature using a Bruker 500 MHz spectrometer.

As a polymerization solvent, cyclohexane was sequentially passed through Q-5 catalyst (available from BASF), silica gel, and activated alumina of the reactor, and bubbled with high-purity nitrogen, thus sufficiently removing water, oxygen and other catalyst poisoning materials, and then used.

The resultant polymer was analyzed via the following methods.

### 1. Melt Flow Index (MI)

Measurement was performed according to ASTM D 2839.

### 2. Density

According to ASTM D 1505, measurement was performed using a density gradient tube.

### 3. Analysis of Melting Point (Tm)

Measurement was performed under 2^{nd} heating conditions at a rate of 10°C/min in a nitrogen atmosphere using Dupont DSC2910.

### 4. Molecular weight and Molecular weight distribution

Measurement was performed in the presence of 1,2,3-trichlorobenzene solvent at a rate of 1.0 mL/min at 135°C using PL210 GPC equipped with PL Mixed-BX2+preCol, and the molecular weight was corrected using a PL polystyrene standard material.

### 5. α-Olefin Content of Copolymer (wt%)

Measurement was performed in ¹³C-NMR mode at 120°C in the presence of a solvent mixture comprising 1,2,4-trichlorobenzene/C₆D₆ (7/3 weight ratio) at 125 MHz using a Bruker DRX500 nuclear magnetic resonance spectrometer.

(Reference: Randal, J. C. JMS-Rev. Macromol. Chem. Phys. 1980, C29, 201)

### [Catalyst Example 1]

### Synthesis of (dichloro)(tert-butylamido)(3,4-dimethylcyclopentadienyl)(dimethylsilane)titanium (IV)

### (1) Synthesis of crotonic acid isopropyl ester

Crotonic acid (193.7 g, 2.25 mol) was dissolved in 2-propanol (860 mL, 11.25 mol) in a 2 L flask and then well stirred, after which sulfuric acid (24 mL, 0.45 mol) was slowly added in droplets to the mixture and refluxed and stirred for 48 hours or longer. The stirred mixture was cooled to room temperature, after which the obtained mixture was washed with distilled water (1000 mL), and the organic layer was separated, neutralized and subjected to atmospheric distillation (80°C), thus obtaining 220 g (1.71 mol, yield 76.3%) of crotonic acid isopropyl ester.
¹H-NMR (C₆D₆) δ=1.01~1.06 (d, 6H), 1.26~1.37 (q, 3H), 5.01~5.08 (m, 1H), 5.70~5.79 (m, 1H), 6.82~6.93 (m, 1H) ppm

### (2) Synthesis of 3,4-dimethyl-2-cyclopentenone

1 L of polyphosphoric acid was added into a 2 L flask, purged with nitrogen, and then refluxed and stirred at 100°C, after which crotonic acid isopropyl ester (76.9 g, 0.6 mol) was slowly added in droplets thereto, and the mixture was stirred for 3 hours and thus turned into dark brown. The mixture thus obtained was mixed with ice water (500 mL) and then neutralized with sodium carbonate, after which the organic layer was extracted with ethylether and then subjected to vacuum distillation (105°C, 40 torr), thus obtaining 56 g (0.51 mol, yield 84.7%) of 3,4-dimethyl-2-cyclopentenone as a colorless transparent liquid.
¹H-NMR (CDCl₃) δ=1.05~1.09 (d, 3H), 1.87 (q, 1H), 1.98 (s, 3H), 2.45~2.51 (q, 1H), 2.67~2.70 (m, 1H), 5.73 (s, 1H) ppm

### (3) Synthesis of tert-butyl-1-(3,4-dimethylcyclopentadienyl)-1,1-dimethylsilaneamine

In a nitrogen atmosphere, lithium aluminum hydride (6.07 g, 0.16 mol) was dissolved in diethylether (250 mL), and 3,4-dimethyl-2-cyclopentenone (33.95 g, 0.31 mol) was slowly added in droplets thereto at 0 °C. Refluxing for 30 minutes and cooling to 0°C via room temperature were performed, after which distilled water (15 mL) was slowly added in droplets thereto and thus unreacted lithium aluminum hydride was removed. The reaction mixture was slowly added to dilute sulfuric acid and the organic layer was extracted with diethylether and then subjected to vacuum distillation, thus obtaining 21.2 g of 2,3-dimethylcyclopentadiene as a yellow liquid. This solution was transferred into a flask and dissolved in pentane (200 mL), after which n-butyl lithium (141 mL, 0.225 mol, 1.6 M) was added in droplets thereto at -78°C. The temperature was increased to room temperature and the reaction was then carried out for 12 hours, thus obtaining 10.5 g (yield 46.9%) of 1,2-dimethylcyclopentadienyl lithium as off-white powder. 5.45 g (54.5 mmol) of the powder was placed in a flask containing diethylether (80 mL), and dichlorodimethylsilane (6.8 mL, 54.5 mmol) was then added in droplets thereto at -78°C. Subsequently, the temperature was increased to room temperature and the reaction was carried out for 12 hours or longer. Diethylether was removed using vacuum distillation, and the resultant product was washed with pentane, thus obtaining 6.35 g (yield 62.4%) of dimethylsilyl-3,4-dimethylcyclopentadienyl chloride as a yellow liquid. This liquid was transferred into a flask without purification and then dissolved in tetrahydrofuran (90 mL), after which lithium-*tert*-butylamine (2.69 g, 34.0 mmol) was slowly added in droplets thereto at -78°C. The reaction was carried out at room temperature for 12 hours or longer and the solvent was then completely removed using vacuum drying, after which the resultant product was extracted with purified pentane, thus obtaining, as a yellow liquid, 6.15 g (27.5 mmol, yield 80.9%) of *tert*-butyl-1-(3,4-dimethylcyclopentadienyl)-1,1-dimethylsilaneamine.
¹H NMR (C₆D₆) : δ=0.00 (s, 6H), 0.28 (s, 3H), 1.05 (s, 3H), 1.07 (s, 9H), 1.09 (s, 3H), 1.85 (s, 2H), 1.94 (s, 2H), 1.98(s, 6H), 2.89 (t, 1H), 3.17 (t, 1H), 6.16 (s, 2H), 6.31~6.70 (m, 1H) ppm

### (4) Synthesis of (dichloro)(tert-butylamido)(3,4-dimethylcyclopentadienyl)(dimethylsilane)titanium (IV)

*tert*-Butyl-1-(3,4-dimethylcyclopentadienyl)-1,1-dimethylsilaneamine (6.15 g, 27.5 mmol) was placed in a flask and dissolved in diethylether (100 mL) in a nitrogen atmosphere, after which n-butyl lithium (22.0 mL) was slowly added in droplets thereto at -78°C. The temperature was gradually increased to room temperature and the reaction was carried out for 12 hours or longer. The solvent was completely removed using vacuum drying and the resultant product was washed with pentane, thus obtaining as off-white powder 5.24 g (yield 81.0%) of lithium (*tert*-butylamido)(3,4-dimethylcyclopentadienyl)dimethylsilane. 3.00 g (12.8 mmol) of the powder and tetrachlorobis(tetrahydrofuran)titanium (IV) (4.26 g, 12.8 mmol) were placed together in a flask and toluene (50 mL) was added thereto so that the reaction was carried out at 80°C for 24 hours or longer. The temperature was decreased to room temperature and filtration was conducted thus removing lithium chloride, and solvent was removed using vacuum drying, after which the resultant product was extracted with pentane and recrystallized, thus obtaining as a yellow solid 1.73 g (yield 39.9%) of (dichloro)(*tert*-butylamido)(3,4-dimethylcyclopentadienyl)(dimethylsilane)titanium (IV).
¹H NMR (C₆D₆) : δ=0.26 (s, 6H), 1.40 (s, 9H), 2.04 (s, 6H), 5.91 (s, 2H) ppm; ¹³C NMR (C₆D₆): δ=0.97, 13.41, 33.18, 105.91, 123.05, 127.84, 128.22, 133.45 ppm.

### [Catalyst Example 2; comparative]

### Synthesis of (dichloro)(tert-butylamido)(3,4-dimethylcyclopentadienyl)(dimethylsilane)zirconium (IV)

Lithium(*tert*-butylamido)3,4-dimethylcyclopentadienyldimethylsilane (0.9 g, 3.83 mmol) and zirconium (IV) chloride (0.891 g, 3.83 mmol) were placed together in a flask and toluene (20 mL) was added thereto so that the reaction was carried out at 80°C for 24 hours or longer. The temperature was decreased to room temperature and filtration was conducted thus removing lithium chloride and solvent was removed using vacuum drying, after which the resultant product was extracted with pentane and recrystallized, thus obtaining as a pale brown solid 0.89 g (yield 60.5%) of (dichloro) (*tert*-butylamido) (3,4-dimethylcyclopentadienyl)(dimethylsilane)zirconium (IV).
¹H NMR (C₆D₆) : δ=0.30 (s, 6H), 1.31 (s, 9H), 2.00 (s, 6H), 5.90 (s, 2H) ppm; ¹³C NMR (C₆D₆) : δ =0.07, 14.36, 32.65, 107.74, 126.86, 126.91, 128.82, 139.34 ppm.

### [Catalyst Example 3; comparative]

### Synthesis of (dichloro)(tert-butylamido)(2,3,4,5-tetramethylcyclopentadienyl)(dimethylsilane)titanium (IV)

### (1) Synthesis of (tert-butylamino)(2,3,4,5-tetramethylcyclopenta-2,4-dienyl)dimethylsilane

2,3,4,5-tetramethylcyclopenta-2,4-diene (3.67 g, 30 mmol) was added into a flask containing tetrahydrofuran (100 mL), n-butyl lithium (12 mL) was added in droplets thereto at 0°C, and the reaction temperature was gradually increased to room temperature so that the reaction was carried out for 8 hours. This solution was cooled to -78°C, dichloromethylsilane (3.87g, 30mmol) was slowly added in droplets thereto, and then the reaction was carried out for 12 hours. After the reaction, the volatile material was removed, and the resultant product was extracted with hexane (100 mL), after which the volatile material was removed, thereby obtaining as pale yellow oil 5.5 g of (chloro) (dimethyl) (2,3,4,5-tetramethylcyclopentadienyl)silane. The (chloro)(dimethyl)(2,3,4,5-tetramethylcyclopentadienyl)silane thus obtained was dissolved in tetrahydrofuran (100 mL) without additional purification, after which lithium *tert-*butylamide (2.02 g) was added in droplets thereto at 0°C and the reaction was carried out at room temperature for 2 hours. After the reaction, the volatile material was removed, and the resultant product was extracted with hexane (100 mL), thus obtaining as pale yellow oil 6.09 g (yield 81%) of (*tert-*butylamino)(2,3,4,5-tetramethylcyclopenta-2,4-dienyl)dimethylsilane.
¹H-NMR (C₆D₆) δ= 0.11 (s, 6H), 1.11 (s, 9H), 1.86 (s, 6H), 2.00 (s, 6H) 2.78 (s, 1H) ppm

### (2) Synthesis of (dichloro)(tert-butylamido)(2,3,4,5-tetramethylcyclopentadienyl)(dimethylsilane)titanium (IV)

(*tert*-Butylamino)(2,3,4,5-tetramethylcyclopenta-2,4-dienyl)dimethylsilane (6.09 g 24.2 mmol) was dissolved in diethylether (100 mL), and n-butyl lithium (9.7 mL) was added in droplets thereto at -78°C, after which the reaction temperature was gradually increased to room temperature and the reaction was carried out for 12 hours. After the reaction, the volatile material was removed, and the resultant product was extracted with hexane (100 mL) thus obtaining 6.25 g of an orange-colored solid. The solid thus obtained was dissolved in toluene (100 mL), and tetrachlorotitanium (IV) (4.50 g 23.7 mmol) was added in droplets thereto at -78°C, after which the reaction temperature was increased to room temperature and the reaction was carried out for 7 hours. After completion of the reaction, the volatile material was removed, and the resultant product was extracted with purified pentane (100 mL) and recrystallized at -35°C, filtered and then vacuum dried, thus obtaining as an orange-colored solid 0.87 g(yield 10%) of (dichloro)(*tert*-butylamido)(2,3,4,5-tetramethylcyclopentadienyl)(dimethylsilane)titanium (IV).
¹H-NMR (C₆D₆) δ= 0.43 (s, 6H), 1.43 (s, 9H), 2.00 (s, 6H), 2.01 (s, 6H) ppm

### [Catalyst Example 4; comparative]

### Synthesis of (dichloro)(tert-butylamido)(2,3,4,5-tetramethylcyclopentadienyl)(dimethylsilane)zirconium (IV)

1.3 g (yield 13.3%) of (dichloro)(*tert-*butylamido)(2,3,4,5-tetramethylcyclopentadienyl)(dimethylsilane)zirconium (IV) was synthesized in the same manner as in Comparative Preparative Example 1, with the exception that 5.52 g (23.7 mmol) of tetrachlorozirconium (IV) was used.
¹H-NMR (C₆D₆) δ= 0.40 (s, 6H), 1.40 (s, 9H), 1.97 (s, 6H), 2.00 (s, 6H) ppm.

### [Example 1]

Ethylene and 1-octene was copolymerized via the following procedures using a batch type polymerization device. Specifically, 1170 mL of cyclohexane and 30 mL of 1-octene were added into a 2000 mL stainless steel reactor sufficiently dried and purged with nitrogen, after which 22.1 mL of modified methylaluminoxane-7 (available from Akzo Nobel, modified MAO-7, 7 wt% A1 Isopar solution) 54.2 mM toluene solution was fed into the reactor. The temperature of the reactor was increased to 80°C, after which 0.4 mL of the (dichloro)(*tert*-butylamido)(3,4-dimethylcyclopentadienyl)(dimethylsilane)titanium (IV) (5.0 mM toluene solution) synthesized in Catalyst Example 1 and 2.0 mL of triphenylmethylinium tetrakis pentafluorophenylborate (99%, Boulder Scientific) 10 mM toluene solution were sequentially added thereto, and the inner pressure of the reactor was adjusted up to 30 kg/cm² with ethylene, after which polymerization was carried out. During the reaction time of 5 minutes, the temperature arrived at 162.2°C in maximum. After 5 minutes, 100 mL of ethanol containing 10 vol% hydrochloric acid aqueous solution was added thereto, thus terminating the polymerization, after which stirring was performed using 1.5 L of ethanol for 1hour, followed by filtering and separating the reaction product. The recovered reaction product was dried in a vacuum oven at 60°C for 8 hours, yielding 62.8g of a polymer. The polymer had a melting point of 117.48°C, a melt index of 0.016, and a density of 0.9124 g/cc, and upon analysis using gel chromatography, a weight average molecular weight (Mw) of 202,000 g/mol, a molecular weight distribution (Mw/Mn) of 4.05, and a 1-octene content of 7.68 wt%.

### [Example 2]

Ethylene and 1-octene were copolymerized in the same manner as in Example 1, with the exception that the reaction temperature was increased up to 140°C before adding the catalyst. During the reaction time of 5 minutes, the temperature arrived at 180.9°C in maximum, and 48.04g of a polymer was finally obtained. The polymer had a melting point of 119.02°C, a melt index of 1.5, a density of 0.9152 g/cc, and upon analysis using gel chromatography, a Mw of 109,100 g/mol, a Mw/Mn of 2.33, and a 1-octene content of 4.98wt%.

### [Example 3]

Ethylene and 1-octene were copolymerized in the same manner as in Example 1, with the exception that 0.4 mL of the (dichloro)(*tert*-butylamido) (3,4-dimethylcyclopentadienyl)(dimethylsilane)zirconium (IV) (5.0 mM toluene solution) synthesized in Catalyst Example 2 was added and the reaction time was set to 10 minutes. During the reaction time of 10 minutes, the temperature arrived at 98.2°C in maximum, and 4.62 g of a polymer was finally obtained. The polymer had a melting point of 133.28°C, a melt index of 0.165, a density of 0.9370 g/cc, and upon analysis using gel chromatography, a Mw of 211,600 g/mol, a Mw/Mn of 3.13, and a 1-octene content of 0.82 wt%.

### [Comparative Example 1]

Ethylene and 1-octene were copolymerized in the same manner as in Example 1, with the exception that the (dichloro)(*tert*-butylamido) (2,3,4,5-tetramethylcyclopentadienyl)(dimethylsilane)titanium (IV) synthesized in Catalyst Example 3 was added. During the reaction time of 5 minutes, the temperature arrived at 163.0°C in maximum, and 66.68 g of a polymer was finally obtained. The polymer had a melting point of 116.35°C, a melt index of 0.004, a density of 0.9420 g/cc, and upon analysis using gel chromatography, a Mw of 247,800 g/mol, a Mw/Mn of 7.30, and a 1-octene content of 6.55 wt%.

### [Comparative Example 2]

Ethylene and 1-octene were copolymerized in the same manner as in Example 1, with the exception that the reaction temperature was increased up to 140°C before adding the catalyst, and the (dichloro)(*tert*-butylamido)(2,3,4,5-tetramethylcyclopentadienyl)(dimethylsilane)titanium (IV) synthesized in Catalyst Example 3 was added. During the reaction time of 5 minutes, the temperature arrived at 184.4°C in maximum, and 40.03 g of a polymer was finally obtained. The polymer had a melting point of 116.21°C, a melt index of 0.56, a density of 0.9218 g/cc, and upon analysis using gel chromatography, a Mw of 106,000 g/mol, a Mw/Mn of 4.31, and a 1-octene content of 6.34 wt%.

### [Comparative Example 3]

Ethylene and 1-octene were copolymerized in the same manner as in Example 1, with the exception that 0.4 mL of the (dichloro)(*tert*-butylamido)(2,3,4,5-tetramethylcyclopentadienyl)(dimethylsilane)zirconium (IV) (5.0 mM toluene solution) synthesized in Catalyst Example 4 was added and the reaction time was set to 10 minutes. During the reaction time of 10 minutes, the temperature arrived at 102.1°C in maximum, and 16.49 g of a polymer was finally obtained. The polymer had a melting point of 125.93°C, a melt index of 0.087, a density of 0.9405 g/cc, and upon analysis using gel chromatography, a Mw of 426,800 g/mol, a Mw/Mn of 3.31, and a 1-octene content of 2.2 wt%.

As is apparent from the above examples, in the polymerization of ethylene alone and in combination with 1-octene under the above polymerization conditions, the polymers could be produced at higher yield, and olefin copolymers having higher 1-octene contents were obtained under the same conditions, compared to the comparative examples. In particular, low-density copolymers could be successfully prepared from ethylene and 1-octene.

Although the preferred embodiments of the present invention have been disclosed for illustrative purposes, those skilled in the art will appreciate that various modifications, additions, and substitutions are possible, without departing from the scope and spirit of the invention as disclosed in the accompanying claims.

## Claims

1. A method of preparing a copolymer of ethylene and α-olefin using a transition metal catalyst composition comprising a transition metal compound represented by Chemical Formula 1 below: 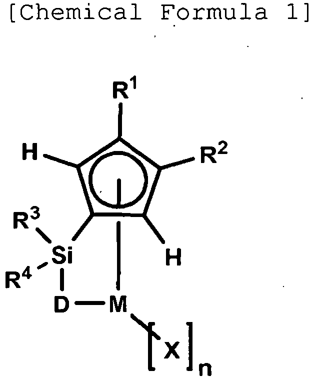
wherein M is titanium;
R¹ and R² are independently a (C1-C7) alkyl group;
D is -N(R⁵)-, in which R⁵ is a (C1-C20)alkyl group;
R³ and R⁴ are independently a (C1-C20)alkyl group;
X is independently a halogen atom or a (C1-C20)alkyl group; and
n is an integer of 2;
and a co-catalyst selected from among an aluminum compound, a boron compound, and mixtures thereof, wherein the α-olefin is one or more selected from among 1-butene, 1-pentene, 1-hexene, 1-heptene, 1-octene, 1-decene, and the copolymer of ethylene and α-olefin has an ethylene content of 50 wt% or more, a density of 0.860 to 0.940 g/ml, a weight average molecular weight of 80,000 ~ 500,000 and a molecular weight distribution (Mw/Mn) of 1.5 ~ 4.1.

2. The method of claim 1, wherein a pressure of the ethylene in a reactor is 6 ~ 150 atom, and a polymerization temperature is 60 ~ 250°C.

3. The method of claim 1, wherein the R¹ and R² are independently selected from among a methyl group, an ethyl group, a n-propyl group, an isopropyl group, a n-butyl group, a sec-butyl group, a *tert*-butyl group, and a n-pentyl group, the R⁵ is selected from among a methyl group, an ethyl group, a n-propyl group, an isopropyl group, a sec-butyl group, a *tert*-butyl group.

4. The method of claim 1, wherein the aluminum compound is used as a co-catalyst comprising one or more selected from aluminoxane and organic aluminum, and is selected from among methylaluminoxane, modified methylaluminoxane, tetraisobutylaluminoxane, trialkylaluminum, dialkylaluminum chloride, alkylaluminium dichloride, dialkylaluminum hydride and mixtures thereof; and the boron compound is selected from among N,N-dimethylanilinium tetrakis(pentafluorophenyl)borate, triphenylmethyl tetrakis(pentafluorophenyl)borate, and mixtures thereof.

## Patentansprüche

1. Verfahren zur Herstellung ein Copolymers aus Ethylen und α- Olefin unter Verwendung einer Übergangsmetall-Katalysator-Zusammensetzung, umfassend eine durch die untenstehende Chemische Formel I dargestellte Übergangsmetallverbindung 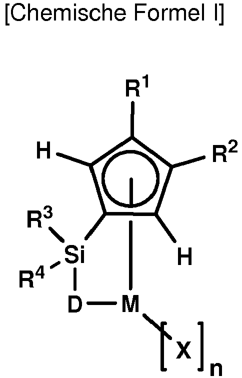
wobei M Titan ist;
R¹ und R² unabhängig eine (C1-C7)-Alkylgruppe sind;
D -N(R⁵) - ist, in welcher R⁵ eine (C1-C20)-Alkylgruppe ist;
R³ und R⁴ unabhängig eine (C1-C20)-Alkylgruppe sind;
X unabhängig ein Halogenatom oder eine (C1-C20)-Alkylgruppe ist; und
n ein Vielfaches von 2 ist;
und einen Co-Kataylsator ausgewählt aus einer Aluminium-Verbindung, einer Bor-Verbindung, und Gemischen daraus, wobei das α- Olefin ein oder mehrere ausgewählt aus 1-Buten, 1-Penten, 1-Hexen, 1-Hepten, 1-Octen, 1-Decen ist und der Copolymer aus Ethylen und α- Olefin einen Ethylengehalt von 50 wt% oder mehr, eine Dichte von 0,860 bis 0,940 g/ml, ein durchschnittliches Molekulargewicht von 80 000 ~ 500 000 und eine Molekulargewichtsverteilung (Mw/Mn) von 1,5 ~ 4,1 hat.

2. Verfahren gemäß Anspruch 1, wobei ein Druck des Ethylens im Reaktor 6 ~150 atom und eine Polymerisierungstemperatur 60 ~ 250°C ist.

3. Verfahren gemäß Anspruch 1, wobei R¹ und R² uanbhängig ausgewählt sind aus einer Methylgruppe, einer Ethylgruppe, einer n-Propylgruppe" einer Isopropyl-Gruppe, einer n-Butylgruppe, einer sec-Butylgruppe, einer tert-Butylgruppe und einer n-Pentylgruppe, R⁵ ausgewählt ist aus einer Methylgruppe, einer Ethylgruppe, einer n-Propylgruppe" einer Isopropyl-Gruppe, einer n-Butylgruppe, einer sec-Butylgruppe, einer tert-Butylgruppe.

4. Verfahren gemäß Anspruch 1, wobei die Aluminium-Verbindung verwendet wird als Co-Katalysator, umfassend ein oder mehrere ausgewählt aus Aluminoxan und organischem Aluminium und ausgewählt aus Methylaluminoxan, modifizierten Methylaluminoxan, Tetraiosbutylaluminoxan, Trialkylaluminium, Dialkylaluminium-Chlorid, Alkylaluminium-Dichlorid, Dialkylaluminium-Hydrid und Gemischen davon; und die Bor-Verbindung ausgewählt ist aus N,N-Dimethylanilinium-Tetrakis(pentafluorophenyl)borat, Triphenylmethyl-tetrakis(pentafluorophenyl)borat und Gemischen davon.

## Revendications

1. Un procédé pour préparer un copolymère d'éthylène et d'α-oléfine en utilisant une composition d'un catalyseur de métal de transition, comprenant un composé d'un métal de transition représenté par la formule chimique I en dessous : 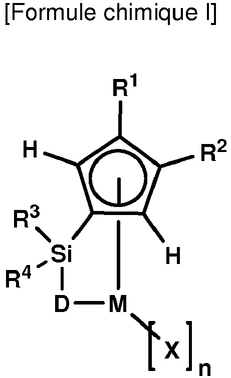
dans lequel M est titane;
R¹ et R² sont, indépendamment, un groupe alkyle en (C1-C7) ;
D est-N(R⁵) -, dans lequel R⁵ est un groupe alkyle en (C1-C20) ;
R³ et R⁴ sont, indépendamment, un groupe alkyle en (C1-C20) ;
X est indépendamment un atom d'halogène ou une group alkyle en (C1-C20) ; et
n est un multiple de 2 ;
et un co-catalyseur choisi parmi un composé d'aluminium, un composé de bore et un mélange de ceux-ci, dans lequel l'α-oléfine est un ou plusieurs choisis parmi 1-butène, 1-pentène, 1-hexène, 1-heptène, 1-octène, 1-decène, et le copolymère d'éthlyène et d'α-oléfine a un contenu d'éthylène de 50% wt ou plus, une densité de 0.860 à 0.940 g/ml, un moyen poids moléculaire de 80 000 ~ 500 000 et une distribution du poids moléculaire (Mw/Mn) de 1.5 ~ 4.1.

2. Le procédé selon la revendication 1 dans lequel une pression de l'éthylène dans le réacteur est 6 ~150 atom et une température de polymérisation est 60 ~ 250°C.

3. Le procédé selon la revendication 1 dans lequel le R¹ et le R² sont indépendamment choisis parmi un groupe méthyle, un groupe éthyle, un groupe n-propyle, un groupe isopropyle, un groupe n-butyle, un groupe sec-butyle, un groupe tert-butyle, et un groupe n-pentyle, le R⁵ est choisi parmi un groupe méthyle, un groupe éthyle, un groupe n-propyle, un groupe isopropyle, un groupe n-butyle, un groupe sec-butyle, un groupe tert-butyle.

4. Le procédé selon la revendication 1 dans lequel le composé d'aluminium est utilisé comme co-catalyseur comprenant un ou plusieurs choisis parmi aluminoxane et aluminium organique, et est choisi parmi methylealuminoxane, methylealuminoxane modifié, tetraisobutylealuminoxane, trialkylealuminium, chlorure de dialkylealuminium, dichlorure d'alkylealuminium, hydrure de dialkylealuminium et mélanges de ceux-ci ; et le composé de bore est choisi parmi N,N-dimethylealuminium-tetrakis(pentafluorophenyle)borate, triphenylemethyle-tetrakis(pentafluorophenyl)borate, et mélanges de ceux-ci.
